# EUROPEAN PATENT APPLICATION

(11) **EP 4 641 398 A1**
(43) Date of publication of application: **29.10.2025**
(21) Application number: 25170465.6
(22) Date of filing: 14.04.2025
(51) Int. Cl.: G06F 13/42

(54) **A SYSTEM-INTEGRATED SOLUTION FOR IO DEVICE EXTENDED CONTROL WITHOUT OPERATING SYSTEM DRIVER INVOLVEMENT**

(30) Priority: 22.04.2024 US 202418642379
(71) Applicant: Microsoft Technology Licensing, LLC, Redmond, WA 98052 (US)
(72) Inventor: CHENG, Yow-Wei, Redmond, 98052-6399 (US); TSAI, Sheng-Han, Redmond, 98052-6399 (US); CHEN, Yung-Jen, Redmond, 98052-6399 (US)
(74) Representative: CMS Cameron McKenna Nabarro Olswang LLP

(57) **Abstract**

A system-integrated solution for input/output device extended-control without operating system driver involvement is provided. In examples, systems and methods include receiving an out-of-band request from a human interface device, receiving an in-band request from the human interface device, and sending a signal directly to a peripheral device, via a micro-control unit, to honor the out-of-band request. In examples, the out-of-band request is received via an inter-integrated circuit.

## Description

### BACKGROUND

Multi-media input devices (e.g., keyboards, mice, etc.) are growing in popularity for use with personal computing devices. For example, multi-media input devices can offer extended controls over the computing devices, such as feature keys to mute microphones, enter airplane modes, turn on/off cameras, etc. However, to use the multi-media features of the input devices, an operating system (OS) dependent driver is needed to receive the functions.

It is with respect to these and other general considerations that embodiments have been described. Also, although relatively specific problems have been discussed, it should be understood that the embodiments should not be limited to solving the specific problems identified in the background.

### SUMMARY

Aspects of the present disclosure relate to a system integrated solution and related methods for IO device extended control without operating system driver involvement.

Embodiments of the present disclosure include receiving an out-of-band request from a human interface device, receiving an in-band request from the human interface device, and sending a signal directly to a peripheral device, via a micro-control unit, to honor the out-of-band request. In some embodiments, the out-of-band request is received at the micro-control unit via an inter-integrated circuit, compared to conventional systems where an in-band request is received via a universal serial bus to process requests using a central processing unit. The out-of-band request can be associated with one of a mouse or keyboard and the peripheral device can be one or more cameras or one or more microphones. The system-integrated approach provided herein for managing requests received from a human interface device can enable input devices (e.g., keyboards, mice, etc.) to alter states of IO devices, under any operating system, without driver support, thereby providing enhanced functionality, safety, and an improved user experience.

This summary is provided to introduce a selection of concepts in a simplified form that are further described below in the Detailed Description. This summary is not intended to identify key features or essential features of the claimed subject matter, nor is it intended to be used to limit the scope of the claimed subject matter. Additional aspects, features, and/or advantages of examples will be set forth in part in the following description and, in part, will be apparent from the description, or may be learned by practice of the disclosure.

### BRIEF DESCRIPTION OF THE DRAWINGS

Non-limiting and non-exhaustive examples are described with reference to the following Figures.
FIG. 1 illustrates an example block diagram of a computing device and associated data flows, according to some aspects described herein.
FIG. 2 illustrates an example block diagram of a computing device and associated data flows, according to some aspects described herein.
FIG. 3 illustrates an example method for extended device control without operating system driver involvement, according to some aspects described herein.
FIG. 4 illustrates an example comparison table of features offered by a conventional driver-based solution to features offered according to some aspects described herein.
FIG. 5 illustrates a block diagram illustrating example physical components of a computing device with which aspects of the disclosure may be practiced.
FIGS. 6A and 6B are simplified block diagrams of a mobile computing device with which aspects of the present disclosure may be practiced.
FIG. 7 is a simplified block diagram of a distributed computing system in which aspects of the present disclosure may be practiced.

### DETAILED DESCRIPTION

In the following detailed description, references are made to the accompanying drawings that form a part hereof, and in which are shown by way of illustrations specific embodiments or examples. These aspects may be combined, other aspects may be utilized, and structural changes may be made without departing from the present disclosure. Embodiments may be practiced as methods, systems or devices. Accordingly, embodiments may take the form of a hardware implementation, an entirely software implementation, or an implementation combining software and hardware aspects. The following detailed description is therefore not to be taken in a limiting sense, and the scope of the present disclosure is defined by the appended claims and their equivalents.

Multi-media input devices (e.g., keyboards, mice, etc.) are growing in popularity for personal computing devices, especially for laptops. Multi-media input devices offer extended control over the computing devices, such as via feature keys to mute a microphone, to enter an airplane mode, to turn on/off a camera, etc. Those extended controls not only facilitate an input shortcut to control certain system functions, but also improve a user experience of the computing device. In examples, mouse/touchpad input devices also include extended controls, such as "scroll down," "scroll up," or other features one of ordinary skill in the art should recognize, to improve a user experience of the device.

However, conventionally, to utilize those multi-media features of the input devices, an operating system (OS) dependent driver is needed to receive the multi-media functions inputs to trigger associated system calls accordingly. Therefore, in conventional systems, without entering an operating system environment and, without operating system drivers being installed/supported, the multi-media features will not function.

To improve upon conventional systems, mechanisms provided herein include a novel system integrated approach to allow input/output (IO) devices to offer extended control to a user without the involvement of OS drivers. Specifically, embodiments of the present disclosure provide the ability to receive an out-of-band request from a human interface device and to control a peripheral device based on the out-of-band request. For example, the out-of-band request can be a request received at a micro-control unit via an inter-integrated circuit, as opposed to an in-band request received at a chipset, as discussed in more detail below.

The system integrated approach provided herein can provide certain benefits. For example, using the novel approach described herein, computing devices can enable multi-media input device (e.g., keyboards, mice, etc.) to turn on/off camera(s) and microphone sensor(s) for privacy protection at any time, under any operating system without driver support. Accordingly, the systems provided herein can provide techniques for interacting with multi-media input devices, which are safer, provide enhanced functionality, and provide an improved user experience.

It is to be understood that, in the paragraphs below, all the mentioned hardware channel types and protocols on top of those channels are examples only. The embodiments described in this disclosure are not necessarily limited to particular mentioned hardware and software components. Any other building blocks (e.g., hardware and/or software components) offering similar functionality should be considered covered by this disclosure.

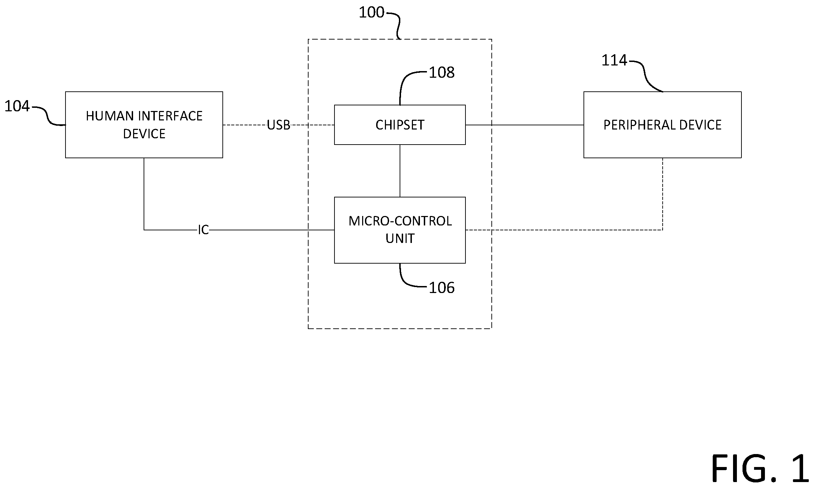

FIG. 1 provides an example of a hardware block diagram for a computing device 100, according to some aspects of the present disclosure. The computing device 100 is in communication with one or more human interface devices (HID) 104. For example, the HIDs 104 can include a keyboard, a mouse, a trackpad, or another type of input device that may be recognized by those of ordinary skill in the art. In certain examples, the HID 104 is part of the computing device 100, while in other examples, the HID 104 is separate from the computing device 100, but in communication with the computing device 100. The HID 104 can be in communication with the computing device 100 via a wired or wireless communication.

The computing device 100 includes a micro-control unit (MCU) 106 and a chipset 108. The computing device 100 may include additional components that should be recognized by those of ordinary skill in the art, such as a processor, memory, etc. In examples, the MCU 206 is a baseboard management controller (BMC) or embedded controller (EC) that can manage components of the computing device 100. In examples, the chipset 108 includes a Southbridge and/or a Northbridge. The chipset 208 can manages various functions related to I/O operations and peripheral device connectivity. The Southbridge may support lower data transfer rates compares to the Northbridge. Other types of chips which the chipset 108 can include should be recognized by those of ordinary skill in the art.

In embodiments, the MCU 106 is configured to receive an out-of-band request from the HID 104. For example, the MCU 106 may be configured to receive the out-of-band request from the HID 104, via an integrated circuit (IC) bus or channel. The IC bus is an out-of-band communication pathway between the HID 104 and the computing device 100. In examples, the IC bus is an inter-integrated circuit (I2C) bus. An I2C bus can be a two-wire low-speed bus used to interface devices. For example, the two wires can be a data line and a clock line. The I2C bus can support bidirectional communication, allowing devices to both send data to and receive data from each other.

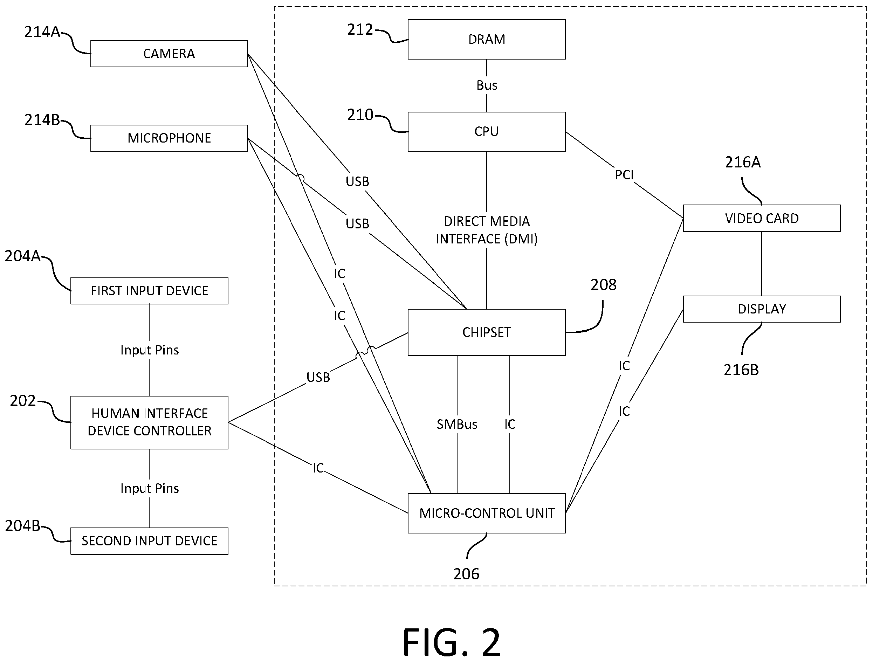

As an alternative to the out-of-band request, in certain examples, the computing device 100 can receive an in-band request from the HID 104. The in-band request is the conventional request sent from the HID 104 to the chipset 108 of the computing device 100, instead of to the MCU 106 of the computing device 100. The chipset 108 coordinates with an operating system and a central processing unit, such as the CPU 210 of FIG. 2, to execute the in-band request. The in-band request can be received at the computing device 100 (e.g., at the chipset 108) via a USB bus, which would be known to those skilled in the art.

Referring back to embodiments of the innovation, the MCU 106 is in communication with the chipset 108. For example, the MCU 106 can be in communication with the chipset 108 via an SMBus, an IC, an I2C, or another communication channel. The chipset 108 is in communication with one or more peripheral devices 114. The peripheral devices 114 can includes a video sensor, an audio sensor, a display, a printer, a projector, or other types of peripheral devices recognized by those of ordinary skill in the art. In examples, the video sensor can be a webcam or another type of camera. Further, the audio sensor can be a microphone.

In examples, the MCU 106 can be in indirect communication with the peripheral devices 114, via the chipset 108. Alternatively, the MCU can be in direct communication with the peripheral devices 114. The peripheral devices 114 can be in wired communication with the computing device 100 and/or in wireless communication with the computing device 100.

In conventional systems, signals from a human interface device go to a typical USB bus of a computing device that requires driver(s) of an OS to trigger corresponding system application programming interfaces (APIs) so that a requested feature can be honored. An advantageous difference of techniques provided herein includes the implementation of the out-of-band path from the HID 104 to the MCU 106 via the IC channel, which does not require the use of OS drivers to interface with the peripheral devices 114.

The MCU 106 can be configured as an IC host device which is responsible for managing the status of the peripheral devices 114. For example, the HID 104 may provide an out-of-band request or raise an interrupt to the MCU 106 when a certain combination of inputs is made by the user at the HID 104, such as from mouse clicks, keyboard clicks, swipes, etc. Upon receiving the out-of-band request, the MCU 206 can read a register of the HID 104 (or controller associated with the HID 104) via the IC channel for the out-of-band request. The MCU 206 can then read a register of the peripheral devices 114. The out-of-band request can include a request to update a status or state of one or more of the peripheral devices 114. For example, the request can be to adapt the peripheral device 114 to on, or off, or a low power mode, or a standby mode, or an airplane mode, or a privacy mode, or another state that may be recognized by those of ordinary skill in the art. In examples, a request to adapt the peripheral device 114 and/or computing device 100 to an airplane mode can include adapting a plurality of devices' states based on the request, such as a Bluetooth state, Wi-Fi state, and/or cellular network state of the peripheral device 114 and/or computing device 100.

After the MCU 106 reads the state or status of the peripheral device 114, the MCU 106 then determines whether the out-of-band request should be honored or not honored. For example, determining whether the out-of-band request should be honored may include comparing the out-of-band request (specifically, an intended state change of the peripheral device associated with the out-of-band request) to a current state of the peripheral devices. The determining may further include whether the in-band communication path is working (e.g., implemented, functioning properly, etc.). As another example, the MCU 106 may check whether the in-band communication path is working, and if so, not honor the out-of-band request. In some examples, it is determined that the feature request should not be honored as will be discussed below. However, if it is determined that the feature request should be honored, the MCU 106 sends a signal to the peripheral device 114 to honor the out-of-band request. The signal can cause a write operation to the register of the peripheral device 114 to cause the state or status change associated with the out-of-band request from the HID 104.

As an example, a user may provide an out-of-band request to the HID 104 for turning off the peripheral device 114, the MCU 106 may determine to honor the request (e.g., because the in-band pathway is inactive and/or the peripheral device 114 is currently on), and then the MCU 106 may send a signal to cause the peripheral device 114 to be turned off. While this example includes switching the peripheral device 114 from on to off, other state changes will be recognized by those of ordinary skill in the art (e.g., switching from off to on, switching from on to standby, switching from a first mode to a second mode, etc.).

The techniques provided herein can be valuable for computing device providers, such as laptop providers, to implement certain functions of I/O devices, even without OS driver support. For example, using techniques provided herein, computing device providers can enable multi-media keyboards to turn on/off camera and/or microphone sensors for privacy protection at any time, even without OS driver support. Therefore, compared to conventional in-band solutions for controlling I/O devices, the techniques provided herein can provide improved privacy protections for users on a system hardware and firmware level. Additional and/or alternative advantages will be recognized by those of ordinary skill in the art.

FIG. 2 provides an example of a hardware block diagram for a computing device 200, according to some aspects of the present disclosure. The computing device 200 is in communication with a human interface device (HID) controller 202 and one or more input devices 204. For example, the input devices 204 can include a first input device 204A and a second input device 204B. The input devices 204 can include a keyboard, a mouse, a trackpad, or another type of input device that may be recognized by those of ordinary skill in the art.

In some examples, the HID controller 202 is part of the computing device 200, while in other examples the HID controller 202 is separate from the computing device 200, but in communication with the computing device 200. For example, the HID controller 202 may be in communication with the computing device 200 via a wired or wireless communication. Further, the input devices 204 are in communication with the HID controller 202. The input devices 204 may be in communication with the HID controller 202 via a wired or wireless communication.

In some examples, the input device 204 are in communication with the HID controller 202 via input pins. The input pins can be physical connectors or electrical terminals where signals from the input devices 204 are received by the HID controller 202. In some examples, the input pins are part of a connector interface of the input devices 204 and/or the HID controller 202. For example, in the case of a universal serial bus (USB) mouse, the input pins can be electrical contacts within a USB connector of the mouse that transmit signals generated by the mouse to a USB port of a computer. Similarly, for other types of input devices like keyboards or game controllers, the input pins can be the contacts within respective connectors of the input devices.

The computing device 200 includes a micro-control unit (MCU) 206, a chipset 208, a central processing unit (CPU) 210, and a dynamic random access memory (DRAM) 212. In some examples, the MCU 206 is configured or otherwise programmed to receive input signals from the one or more input devices 204 (e.g., the first input device 204A and/or the second input device 204B). The MCU 206 can be configured to receive the input signal from the input devices 204 via the HID controller 202. Further, the MCU 206 can be configured to scan and/or interpret incoming signals from the input devices 204.

In examples, the MCU 206 is configured to receive input signals from the input devices 204 via an integrated circuit (IC) and/or USB buses. In examples, the signal transferring on the USB bus goes to the chipset 208 of the computing device 200. Transferring the signal from the input devices 204 to the chipset 208 is an "in-band communication path" from the input devices 204 to the computing device 200. The chipset 208 is in communication with the CPU 210, such as via a direct media interface (DMI). Further, the CPU 210 is in connection with the DRAM 212, such as via a bus.

In examples, the chipset 208 includes a Southbridge and/or a Northbridge. The chipset 208 can manages various functions related to I/O operations and peripheral device connectivity. The Southbridge may support lower data transfer rates compares to the Northbridge. Other types of chips which the chipset 208 can include should be recognized by those of ordinary skill in the art.

The chipset 208 is in communication with the HID controller 202, such as via a USB bus. The chipset 208 is further in communication with one or more peripheral devices 214, such as a video sensor 214A and/or an audio sensor 214B. In examples, the video sensor 214A is a webcam or other type of camera. In examples, the audio sensor 214B is a microphone.

Alternative to the in-band path, is an out-of-band path in which the signal transferring from the HID controller 202 and/or input devices 204 goes to the MCU 206 via an integrated circuit (IC) channel or bus, such as an inter-integrated circuit (I2C) channel or bus. An I2C can be a two-wire low-speed bus used to interface devices. For example, the two wires can be a data line and a clock line. The I2C bus can support bidirectional communication, allowing devices to both send data to and receive data from each other. In examples, the MCU 206 can be a baseboard management controller (BMC) or embedded controller (EC) that can manage components of the computing device.

In conventional systems, input devices, such as multi-media keyboard feature key inputs go to a typical USB bus that requires driver(s) of an OS to trigger corresponding system application programming interfaces (APIs) so that a requested multi-media feature can be honored. An advantageous difference of techniques provided herein includes the implementation of the out-of-band path from the input devices 204 to the MCU 206 via the IC channel.

The MCU 206 can be configured as an IC host device which is responsible for managing the status of the peripheral devices 214 of the computing device 200. For example, the HID controller 202 may provide an out-of-band request or raise an interrupt to the MCU 206 when a special combination of keystrokes or a specific feature request is made from the input devices 204, such as from a mouse and/or keyboard. Upon receiving the out-of-band request (e.g., the interrupt), the MCU 206 can read a register of the HID controller 202 via the IC channel for the input report. The MCU 206 may then performs a read to a register of the peripheral devices 214. A status or state updates of one or more of the peripheral devices 214 may be requested by the input report. For example, the state update may include whether the peripheral device 214 is on, or off, or on a low power mode, or on a standby mode, or in an airplane mode, or in a privacy mode, or in another state that may be recognized by those of ordinary skill in the art. In examples, a request to adapt the peripheral device 214 and/or computing device 200 to an airplane mode can include adapting a plurality of devices' states based on the request, such as a Bluetooth state, Wi-Fi state, and/or cellular network state of the peripheral device 214 and/or computing device 200.

After the MCU 206 reads the state or status of the peripheral device 214, the MCU 206 then determines whether the out-of-band request should be honored or not honored. For example, determining whether the out-of-band request should be honored may include comparing the out-of-band request (specifically, an intended state change of the peripheral device associated with the out-of-band request) to a current state of the peripheral devices. The determining may further include whether the in-band communication path is working (e.g., implemented, functioning properly, etc.). For example, the MCU 206 may check whether the in-band communication path is working, and if so, not honor the out-of-band request. In some examples, it is determined that the feature request should not be honored as will be discussed below. However, if it is determined that the feature request should be honored, the MCU 206 writes to the register of corresponding peripheral device 214 to trigger the state or status change of the peripheral device 214 in response to the out-of-band request (e.g., that a user provided to the input device 204).

For example, a user may provide an out-of-band request to the input device 204 for turning off the webcam 214A, the MCU 206 may determine to honor the request and then determine that the webcam 214A is currently on (e.g., in a first state), and then the MCU 206 may cause the webcam 214A to be turned off (e.g., switching the webcam 214A from the first state, i.e., on, to a second state that is different than the first state, i.e., off). As another example, a user may provide an out-of-band request to the input device 204 for turning off a microphone 214B, the MCU 206 may determine that the microphone 214B is currently on (e.g., in a first state), and then the MCU 206 may cause the microphone 214B to be turned off (e.g., switching the microphone 214B from the first state to a second state that is different than the first state). While the examples discussed here include switching the peripheral devices 214 from on to off, other state changes will be recognized by those of ordinary skill in the art (e.g., switching from off to on, switching from on to standby, switching from a first mode to a second mode, etc.). In some examples, the MCU 206 may control the peripheral devices individually by disabling the corresponding USB port on the chipset 208, when the MCU 206 receives the out-of-band requests.

In yet other examples, the MCU 206 may issue an IC request to one or more output devices 216, such as a video card 216A and/or a display 216B. The display 216B may be a liquid crystal display (LCD). In examples, the MCU 206 may issue an IC request to an HID controller, such as the HID controller 202. In examples, the IC request transmitted to the output devices 216 causes a pre-defined visual indication to be displayed. The pre-defined visual indication may include an "On-Screen-Display" (OSD) pattern. In certain examples, the IC request causes a visual indication on one of the input devices 204, such as lighting up an indicator light-emitting diode (LED) on the first input device 204A. The visual indication may be activated (e.g., a light is lit up) if it is determined that a state change request should be indicated.

Determining whether a state change request should be indicated (e.g., via an audio and/or visual indication) includes checking whether an in-band communication of the peripheral devices 214 and CPU 210 is available. Determining whether a state change request should be indicated includes checking whether an out-of-band communication of the peripheral devices 214 and MCU 206 is available. In accordance with specific embodiments, based on the indication of the state change request, users can observe the result of a feature activation/de-activation corresponding to the requested state change that had been made. The MCU 206 may be programmed to turn on or off a specific status visual indicator (e.g., LED) in response to a state change request being honored (e.g., a feature being activated/de-activated). In some examples, the visual indication can be located on the peripheral device 214 and/or input device 204, such as by activating an LED on the microphone 214B to indicate that the microphone 214B is muted when the microphone device is being turned off. Those skilled in the art will appreciate that many other additional and/or alternative examples exist wherein the user is provided with a visual indicator of the device status. Further, there may be other modes of providing the user with an indication of a status change.

The MCU 206 is configured or otherwise programmed to behave differently under in-band and out-of-band use scenarios. The computing device can boot to OS with appropriate drivers of the input device 204. For example, the computing device may start up and load the OS (e.g., Windows, macOS, Linux, etc.) into memory. During this stage, the computing device may initialize essential hardware components and prepare for user interactions. Once the OS is loaded, it may need to recognize and initialize the input devices 204 connected to the computing device, such as a mouse, a keyboard, a touchpad, a joystick, etc. The OS requires appropriate drivers (e.g., software modules) to communicate effectively with the input devices 104. If the drivers for the input devices 204 are available and properly installed, the OS can load them during the boot process.

In examples, after the OS is booted, MCU 206 is then loaded. Loading the MCU 206 can refer to initializing and activating communication between the MCU 206 and other components (e.g., the input devices 204). In examples, a driver of MCU 206 may utilize system management bus (SMBus) communication to inform MCU 206 firmware to ignore out-of-band feature activation requests. By doing so, techniques provided herein could offer an improved user experience when drivers are confirmed to be correctly loaded on the system. Accordingly, techniques provided herein can be implemented alongside conventional techniques, to provide an option for controlling functionality of I/O devices when drivers are not correctly loaded on a system, without removing existing options for controlling functionality of I/O devices when drivers are correctly loaded on a system.

In examples, the techniques provided herein can be valuable for computing device providers, such as laptop providers, to implement certain functions of I/O devices, even without OS driver support. For example, using techniques provided herein, computing device providers can enable multi-media keyboards to turn on/off camera and/or microphone sensors for privacy protection at any time, even without OS driver support. Therefore, compared to conventional in-band solutions for controlling I/O devices, the techniques provided herein can provide improved privacy protections for users on a system hardware and firmware level. Additional and/or alternative advantages will be recognized by those of ordinary skill in the art.

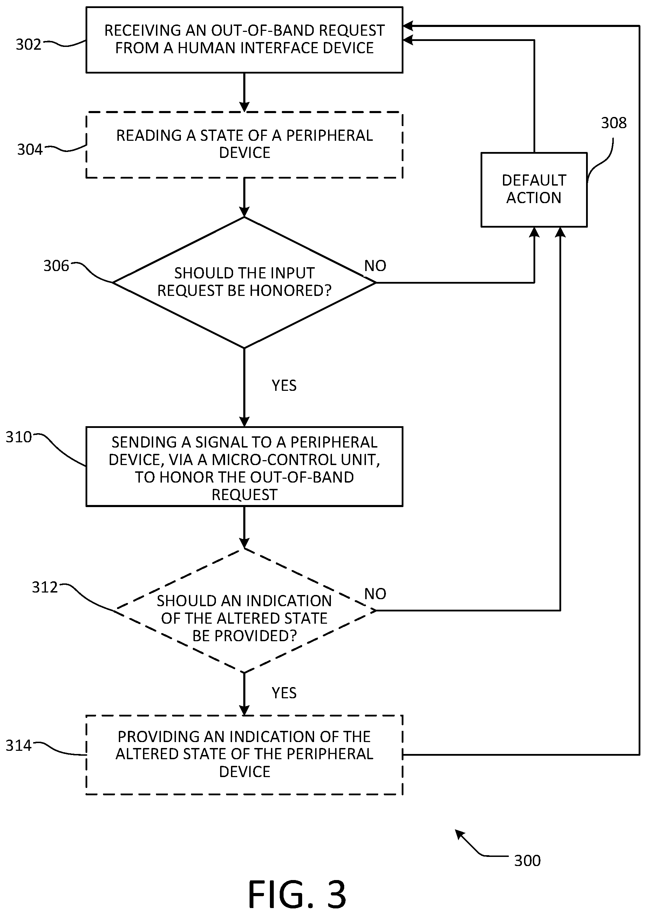

FIG. 3 illustrates an example method 300, according to some aspects described herein. The method 300 is a method for extended I/O control without OS involvement. In examples, aspects of method 300 are performed by a device, such as the computing device 100 discussed above with respect to FIG. 1.

Method 300 begins at operation 302 where an out-of-band request is received from a human interface device (HID) or HID controller. The out-of-band request is received at an MCU, such as the MCU 106 of FIG. 1 and/or the MCU 206 of FIG. 2. In examples, the HID is the same or similar as the HID 104 of FIG. 1 and/or the input devices 204 of FIG. 2. In examples, the HID controller is the same or similar as the HID controller 202 of FIG. 2. An interrupt request may be received from the HID controller and, in response, the out-of-band request may be read from the HID controller (e.g., from a register or other memory store of the HID controller). In examples, the out-of-band request is read or otherwise received from the HID controller via an IC. For instance, the IC can be an I2C. The I2C can be a two-wire low-speed bus used to interface devices. The two wires can be a data line and a clock line. The I2C bus can support bidirectional communication, allowing devices to both send data to and receive data from each other.

In examples, the out-of-band request corresponds to an intended state change of a peripheral device. For example, the out-of-band request may be received from or otherwise associated with an input device, such as a mouse or keyboard. Therefore, a user may provide input to the mouse or keyboard to indicate the intended state change of the peripheral device via the out-of-band request.

In examples, at operation 302, an in-band request is further received from the HID or HID controller. The in-band request can be received via a chipset, such as the chipset 108 of FIG. 1 and/or the chipset 208 of FIG. 2. In examples, the in-band request is read or otherwise received from the HID controller via a USB bus.

At operation 304, a state of the peripheral device can be read or otherwise received. The state is read from a register or other memory store of the peripheral device. The state may be read via a USB channel. Alternatively, the state may be read via an IC channel (e.g., a separate IC channel from the IC channel from which the out-of-band request was received). In examples, the state is directly read via an MCU, such as the MCU 106. Alternatively, the state may be indirectly read via an MCU, such as via an intermediary component (e.g., the chipset 208). In examples, the peripheral device is one of a camera or a microphone. Additional and/or alternative types of peripheral devices should be recognized by those of ordinary skill in the art.

At operation 306 it is determined whether the out-of-band request should be honored. For example, the out-of-band request may be compared to the read state of the peripheral device to determine whether the out-of-band request should be honored. In examples, the determining includes determining whether the read state of the peripheral device is different than the intended state change of the peripheral device. The intended state change of the peripheral device may be indicated or otherwise determined based on the out-of-band request. In examples, the determining includes determining whether an in-band communication path is functioning properly. If an in-band communication path is active and has not been flagged as operating improperly, then operation 306 may determine that the out-of-band request should not be honored (e.g., to instead use the in-band communication path).

If it is determined that the out-of-band request should not be honored (e.g., because the intended state to which the peripheral device is to be changed is the same as the current state of the peripheral device, or because it is preferable to use the in-band communication path), then the method 300 advances to operation 308. At operation 308, a default action may occur. For example, the out-of-band request and/or read state of the peripheral device may have an associated default action, such that, in some instances, no action may be performed as a result of the received out-of-band request and read state of the peripheral device. In examples, operation 308 may include determining whether there is a default action associated with the received out-of-band request and/or read state. In examples, a user and/or system may be prompted with an indication that the out-of-band request should not be honored, such as via an audio and/or visual indication. Method 300 may terminate at operation 308. Alternatively, method 300 may return to operation 302, from operation 308, to create a continuous feedback loop of receiving an out-of-band request from an HID and determining whether the out-of-band request should be honored.

If however, it is determined that the out-of-band request should be honored (e.g., because the intended state to which the peripheral device is to be changed is different than the current state of the peripheral device), then the method 300 advances to operation 310. At operation 310, a signal is sent to the peripheral device, via the MCU, to honor the out-of-band request. In examples, sending the signal via the MCU bypasses a CPU. Bypassing the CPU by sending the signal through the MCU can avoid using operating system drivers, such that the signal is sent independent of operating system drivers. In examples, sending the signal to the peripheral device includes writing to the peripheral device, such that the state of the peripheral device is altered. In examples, the MCU writes to the peripheral device to alter the state of the peripheral device. Writing to the peripheral devices can include updating a register or other memory store corresponding to the peripheral device. In examples, the peripheral device is written to via an IC channel. Alternatively, the peripheral device can be written to via an USB channel.

As an example, the out-of-band request may include a request to turn off a camera or microphone, and the read state of the camera or microphone may correspond to the camera or microphone being on. Accordingly, since the intended state change (e.g., turning to an off state) is different than the current state (e.g., an on state), the MCU may write to the camera or microphone to alter the state (e.g., from an on state to an off state). Additional and/or alternative examples should be recognized by those of ordinary skill in the art. For example, a peripheral device may instead be switched from off to on, from a first state/mode to a second state/mode, from off/on to a standby mode, etc.

Method 300 may terminate at operation 310. Alternatively, method 300 may return to operation 302, from operation 308, to create a continuous feedback loop of receiving an out-of-band request from an HID, determining whether the out-of-band request should be honored, and (if appropriate) honoring the out-of-band request. In some examples, method 300 may advance from operation 310 to operation 312.

In some examples, at operation 312 it is determined whether an indication of the altered state of the peripheral device and/or an indication of the out-of-band request should be provided. For example, at operation 312, it may be determined whether in-band communication to the peripheral device and/or the MCU are available. If it is determined that the indication should not be displayed, then the method 300 advances to operation 308. At operation 308, a default action may occur. For example, no action may be performed. In examples, operation 308 may include determining whether there is a default action that should be performed. In examples, a user and/or system may be prompted with an indication that the indication should not be displayed, such as with an explanation as to why. Method 300 may terminate at operation 308. Alternatively, method 300 may return to operation 302, from operation 308, to create a continuous feedback loop of receiving an out-of-band request from an HID and determining whether the out-of-band request should be honored.

If however, it is determined that the indication should be provided, then method 300 may advance to operation 314 at which the indication is provided. For example, operation 314 may include writing to the register or some other memory of an output device, such as via an IC channel. In examples, operation 314 may include causing a visual indication of the altered state of the peripheral device to be displayed via an output device (e.g., the output device 216, such as video card 216A and/or display 216B of FIG. 2). The visual indication may be caused to be displayed via an output device such as a mouse, or a keyboard, or a joystick with a light (e.g., LED) or display screen for receiving output. In certain examples, the output device may be different than any HID, input devices, and/or peripheral devices in a system associated with method 300. Alternatively, the output device may be the same as an HID, input device, and/or peripheral device in a system associated with method 300.

Method 300 can provide certain benefits. For example, using the novel approach described herein computing devices can enable multi-media input devices (e.g., keyboards, mice, etc.) to change states of camera(s), microphone sensor(s), and/or other I/O devices for privacy protection, at any time, under any operating system, without driver support. Accordingly, the method 300 can provide techniques for interacting with multi-media input devices, which are safer, have improved functionality, and provide an improved user experience compared to conventional systems.

Method 300 may terminate at operation 314. Alternatively, method 314 may return to operation 302, from operation 314, to create a continuous feedback loop of receiving an out-of-band request from an HID, determining whether the out-of-band request should be honored, and performing further downstream actions, if appropriate.

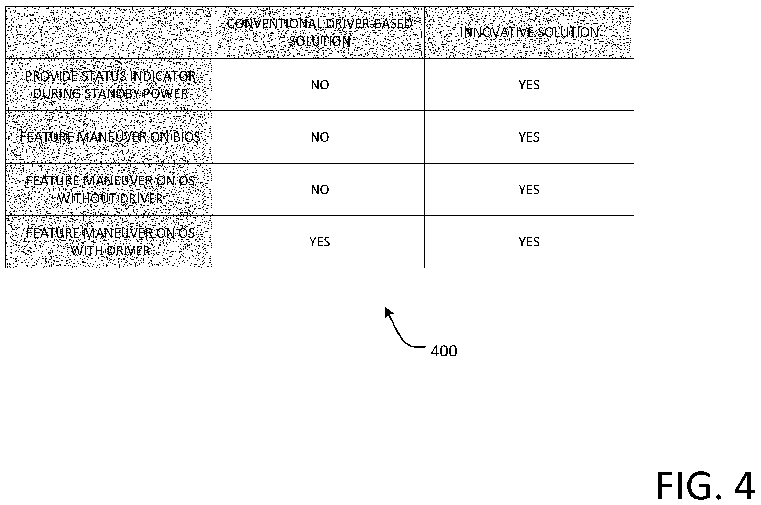

FIG. 4 illustrates a comparison table 400 of features offered by conventional driver-based solutions compared to the innovative solution provided by the present disclosure. Both conventional systems and the innovative solution provided herein may be capable of maneuvering features (e.g., changing a state of I/O devices) via an OS with drivers. However, the innovative solution provided herein has several advantages over conventional driver-based solutions. For example, the innovative solution allows for maneuvering features on OS without drivers (e.g., by using the out-of-band pathway via the IC channel between the HID controller 102 and the MCU 106 of FIG. 1). As another example, the innovative solution allows for maneuvering features on a basic input/output system (BIOS). In examples, BIOS is firmware embedded on a computer that initializes and tests hardware components, loads the OS into memory, and provides basic I/O services to the OS and applications. As yet another example, the innovative solution can provide status indicators of I/O devices during standby power (e.g., if the MCU 106 of FIG. 1 is activated). In examples, the provided status indications can include visual indications (e.g., lights, patterns on a display, etc.) and/or audio indicators (e.g., sounds emitted from a speaker).

Another benefit relates to the aid in overcome the situation where a malicious actor can attempt to manipulate multi-media functions of a user's computing device, such as by manipulating the OS or driver of the computing device. The malicious actor may swap out the driver of the computing device to override a user's control of a peripheral device. However, the techniques provided herein can thwart such attempts by allowing for the use of multi-media features independent from an OS or drivers of a computing device. Further, in certain examples, multi-media input devices may not be functional across computing devices, such as because the computing devices have varying OS systems and the multi-media input device is dependent on a particular OS system. However, using techniques provided herein, a multi-media device can be functional across computing devices with varying OS systems, such as because the techniques provided herein are not dependent on OS systems to operate. Additional and/or alternative advantages of mechanisms provided herein may be recognized by those of ordinary skill in the art, at least in light of the teachings provided herein.

Accordingly, the innovative solution (e.g., including the out of band pathway) provides an improved user experience over conventional systems. In examples, the innovative solution also provides advantageous privacy and security functions compared to conventional systems. For example, a shutting a camera, shutting down a fingerprint sensor, and/or muting a microphone could be triggered and implemented earlier than when a computing device is fully booted with loaded drivers, such as when a system is in standby power (e.g., if the MCU 106/206 of FIG. 1 and/or FIG. 2 is activated).

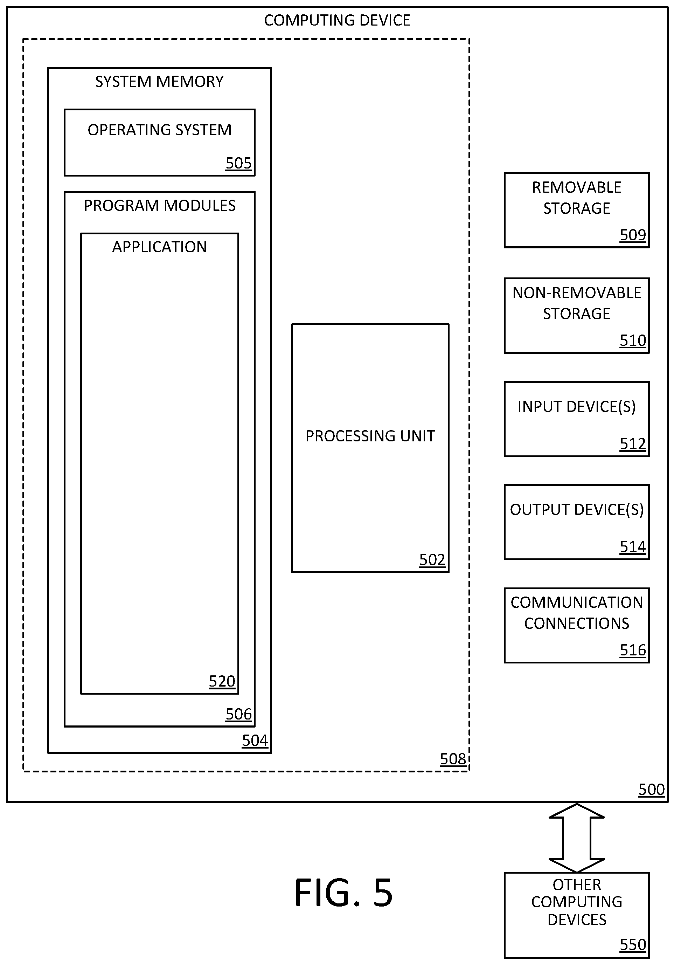

FIGS. 5-7 and the associated descriptions provide a discussion of a variety of operating environments in which aspects of the disclosure may be practiced. However, the devices and systems illustrated and discussed with respect to FIGS. 5-7 are for purposes of example and illustration and are not limiting of a vast number of computing device configurations that may be utilized for practicing aspects of the disclosure, described herein.

FIG. 5 is a block diagram illustrating physical components (e.g., hardware) of a computing device 500 with which aspects of the disclosure may be practiced. The computing device components described below may be suitable for the computing devices described above, including the computing device 100 in FIG. 1 and/or the computing device 200 in FIG. 2. In a basic configuration, the computing device 500 may include at least one processing unit 502 and a system memory 504. Depending on the configuration and type of computing device, the system memory 504 may comprise, but is not limited to, volatile storage (e.g., random access memory), non-volatile storage (e.g., read-only memory), flash memory, or any combination of such memories.

The system memory 504 may include an operating system 505 and one or more program modules 506 suitable for running software application 520, such as one or more components supported by the systems described herein. The operating system 505, for example, may be suitable for controlling the operation of the computing device 500.

Furthermore, aspects of the disclosure may be practiced in conjunction with a graphics library, other operating systems, or any other application program and is not limited to any particular application or system. This basic configuration is illustrated in FIG. 5 by those components within a dashed line 508. The computing device 500 may have additional features or functionality. For example, the computing device 500 may also include additional data storage devices (removable and/or non-removable) such as, for example, magnetic disks, optical disks, or tape. Such additional storage is illustrated in FIG. 5 by a removable storage device 509 and a non-removable storage device 510.

As stated above, a number of program modules and data files may be stored in the system memory 504. While executing on the processing unit 502, the program modules 506 (e.g., application 520) may perform processes including, but not limited to, the aspects, as described herein. Other program modules that may be used in accordance with aspects of the present disclosure may include electronic mail and contacts applications, word processing applications, spreadsheet applications, database applications, slide presentation applications, drawing or computer-aided application programs, etc.

Furthermore, aspects of the disclosure may be practiced in an electrical circuit comprising discrete electronic elements, packaged or integrated electronic chips containing logic gates, a circuit utilizing a microprocessor, or on a single chip containing electronic elements or microprocessors. For example, aspects of the disclosure may be practiced via a system-on-a-chip (SOC) where each or many of the components illustrated in FIG. 5 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to the capability of client to switch protocols may be operated via application-specific logic integrated with other components of the computing device 500 on the single integrated circuit (chip). Some aspects of the disclosure may also be practiced using other technologies capable of performing logical operations such as, for example, AND, OR, and NOT, including but not limited to mechanical, optical, fluidic, and quantum technologies. In addition, some aspects of the disclosure may be practiced within a general purpose computer or in any other circuits or systems.

The computing device 500 may also have one or more input device(s) 512 such as a keyboard, a mouse, a pen, a sound or voice input device, a touch or swipe input device, etc. The output device(s) 514 such as a display, speakers, a printer, etc. may also be included. The aforementioned devices are examples and others may be used. The computing device 500 may include one or more communication connections 516 allowing communications with other computing devices 550. Examples of suitable communication connections 516 include, but are not limited to, radio frequency (RF) transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 504, the removable storage device 509, and the non-removable storage device 510 are all computer storage media examples (e.g., memory storage). Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 500. Any such computer storage media may be part of the computing device 500. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

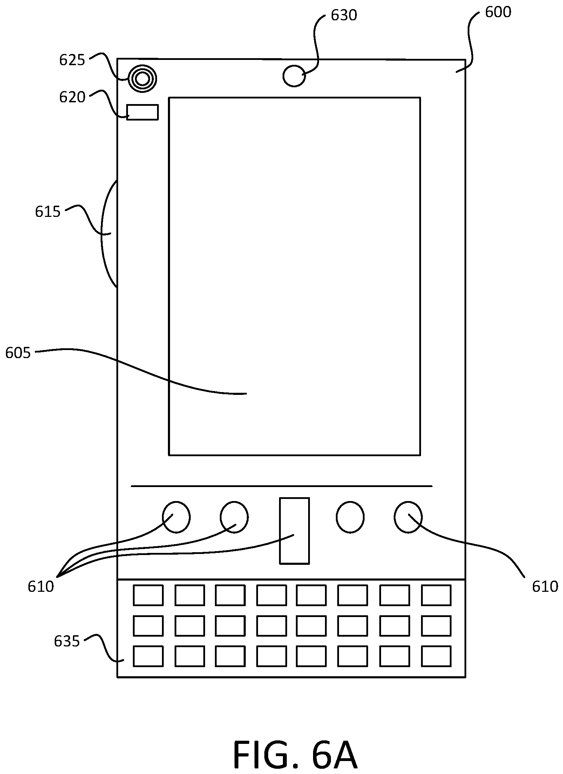

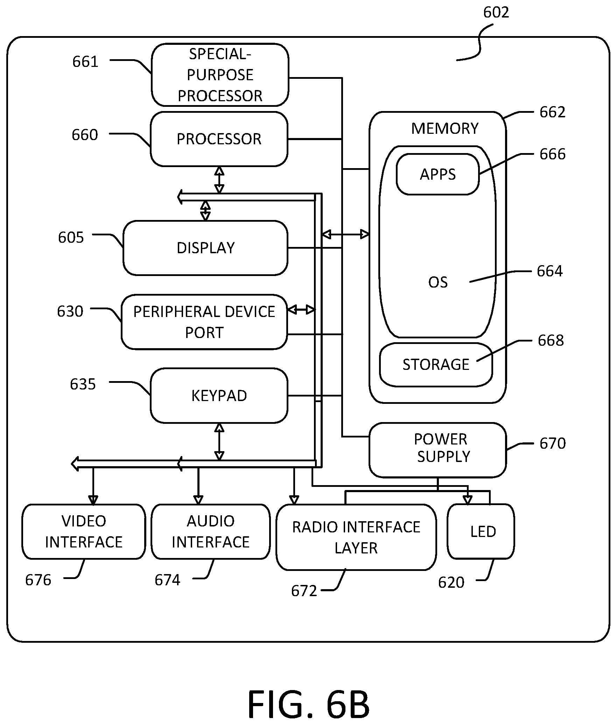

FIGS. 6A and 6B illustrate a mobile computing device 600, for example, a mobile telephone, a smart phone, wearable computer (such as a smart watch), a tablet computer, a laptop computer, and the like, with which some aspects of the disclosure may be practiced. In some aspects, the client may be a mobile computing device. With reference to FIG. 6A, one aspect of a mobile computing device 600 for implementing the aspects is illustrated. In a basic configuration, the mobile computing device 600 is a handheld computer having both input elements and output elements. The mobile computing device 600 typically includes a display 605 and one or more input buttons 610 that allow the user to enter information into the mobile computing device 600. The one or more input buttons 610 may be "soft" buttons that are generated on the touch screen display. The display 605 of the mobile computing device 600 may also function as an input device (e.g., a touch screen display).

If included, an optional side input element 615 allows further user input. The side input element 615 may be a rotary switch, a button, or any other type of manual input element. In alternative aspects, mobile computing device 600 may incorporate more or less input elements. For example, the display 605 may not be a touch screen in some examples.

In yet another alternative example, the mobile computing device 600 is a portable phone system, such as a cellular phone. The mobile computing device 600 may also include an optional keypad 635. Optional keypad 635 may be a physical keypad or a "soft" keypad generated on the touch screen display.

In various examples, the output elements include the display 605 for showing a graphical user interface (GUI), a visual indicator 620 (e.g., a light emitting diode), and/or an audio transducer 625 (e.g., a speaker). In some aspects, the mobile computing device 600 incorporates a vibration transducer for providing the user with tactile feedback. In yet another aspect, the mobile computing device 600 incorporates input and/or output ports, such as an audio input (e.g., a microphone jack), an audio output (e.g., a headphone jack), and a video output (e.g., a HDMI port) for sending signals to or receiving signals from an external device.

FIG. 6B is a block diagram illustrating the architecture of one aspect of a mobile computing device. That is, the mobile computing device 600 can incorporate a system (e.g., an architecture) 602 to implement some aspects. In some examples, the system 602 is implemented as a "smart phone" capable of running one or more applications (e.g., browser, e-mail, calendaring, contact managers, messaging clients, games, and media clients/players). In some aspects, the system 602 is integrated as a computing device, such as an integrated personal digital assistant (PDA) and wireless phone.

One or more application programs 666 may be loaded into the memory 662 and run on or in association with the operating system 664. Examples of the application programs include phone dialer programs, e-mail programs, personal information management (PIM) programs, word processing programs, spreadsheet programs, Internet browser programs, messaging programs, and so forth. The system 602 also includes a non-volatile storage area 668 within the memory 662. The non-volatile storage area 668 may be used to store persistent information that should not be lost if the system 602 is powered down. The application programs 666 may use and store information in the non-volatile storage area 668, such as e-mail or other messages used by an e-mail application, and the like. A synchronization application (not shown) also resides on the system 602 and is programmed to interact with a corresponding synchronization application resident on a host computer to keep the information stored in the non-volatile storage area 668 synchronized with corresponding information stored at the host computer. As should be appreciated, other applications may be loaded into the memory 662 and run on the mobile computing device 600 described herein.

The system 602 has a power supply 670, which may be implemented as one or more batteries. The power supply 670 might further include an external power source, such as an AC adapter or a powered docking cradle that supplements or recharges the batteries.

The system 602 may also include a radio interface layer 672 that performs the function of transmitting and receiving radio frequency communications. The radio interface layer 672 facilitates wireless connectivity between the system 602 and the "outside world," via a communications carrier or service provider. Transmissions to and from the radio interface layer 672 are conducted under control of the operating system 664. In other words, communications received by the radio interface layer 672 may be disseminated to the application programs 666 via the operating system 664, and vice versa.

The visual indicator 620 may be used to provide visual notifications, and/or an audio interface 674 may be used for producing audible notifications via the audio transducer 625. In the illustrated example, the visual indicator 620 is a light emitting diode (LED) and the audio transducer 625 is a speaker. These devices may be directly coupled to the power supply 670 so that when activated, they remain on for a duration dictated by the notification mechanism even though the processor 660 and/or special-purpose processor 661 and other components might shut down for conserving battery power. The LED may be programmed to remain on indefinitely until the user takes action to indicate the powered-on status of the device. The audio interface 674 is used to provide audible signals to and receive audible signals from the user. For example, in addition to being coupled to the audio transducer 625, the audio interface 674 may also be coupled to a microphone to receive audible input, such as to facilitate a telephone conversation. In accordance with aspects of the present disclosure, the microphone may also serve as an audio sensor to facilitate control of notifications, as will be described below. The system 602 may further include a video interface 676 that enables an operation of an on-board camera 630 to record still images, video stream, and the like.

A mobile computing device 600 implementing the system 602 may have additional features or functionality. For example, the mobile computing device 600 may also include additional data storage devices (removable and/or non-removable) such as, magnetic disks, optical disks, or tape. Such additional storage is illustrated in FIG. 6B by the non-volatile storage area 668.

Data/information generated or captured by the mobile computing device 600 and stored via the system 602 may be stored locally on the mobile computing device 600, as described above, or the data may be stored on any number of storage media that may be accessed by the device via the radio interface layer 672 or via a wired connection between the mobile computing device 600 and a separate computing device associated with the mobile computing device 600, for example, a server computer in a distributed computing network, such as the Internet. As should be appreciated such data/information may be accessed via the mobile computing device 600 via the radio interface layer 672 or via a distributed computing network. Similarly, such data/information may be readily transferred between computing devices for storage and use according to well-known data/information transfer and storage means, including electronic mail and collaborative data/information sharing systems.

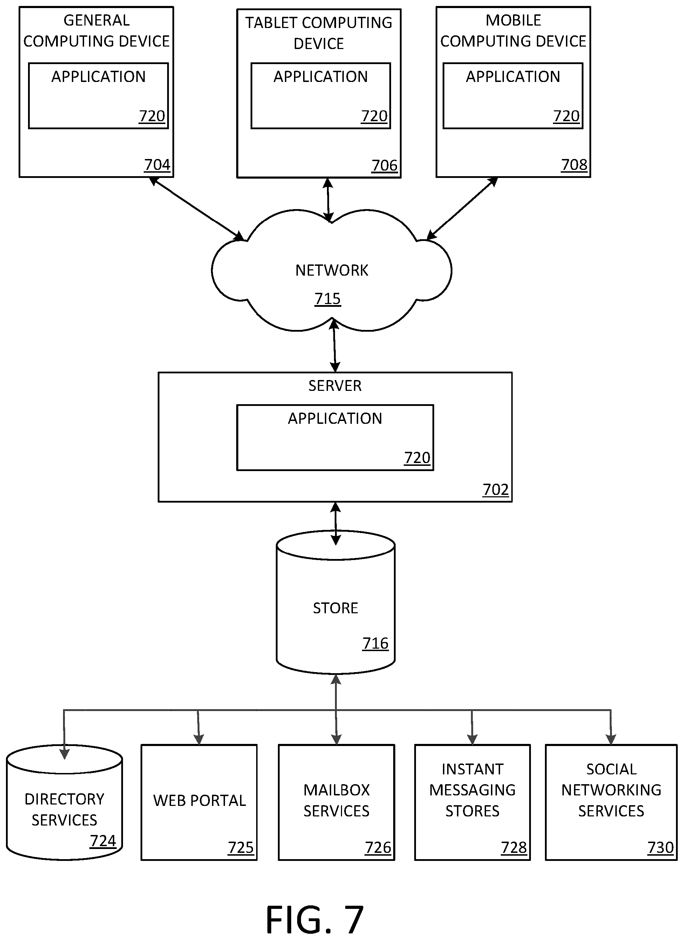

FIG. 7 illustrates one aspect of the architecture of a system for processing data received at a computing system from a remote source, such as a personal computer 704, tablet computing device 706, or mobile computing device 708, as described above. Content displayed at server device 702 may be stored in different communication channels or other storage types. For example, various documents may be stored using a directory service 724, a web portal 725, a mailbox service 726, an instant messaging store 728, or a social networking site 730.

An application 720 (e.g., similar to the application 520) may be employed by a client that communicates with server device 702. Additionally, or alternatively, the application 720 may be employed by server device 702. The server device 702 may provide data to and from a client computing device such as a personal computer 704, a tablet computing device 706 and/or a mobile computing device 708 (e.g., a smart phone) through a network 715. By way of example, the computer system described above may be embodied in a personal computer 704, a tablet computing device 706 and/or a mobile computing device 708 (e.g., a smart phone). Any of these examples of the computing devices may obtain content from the store 716, in addition to receiving graphical data useable to be either pre-processed at a graphic-originating system, or post-processed at a receiving computing system.

Embodiments of the present disclosure include systems, methods, and non-transitory computer-readable medium for extended I/O control without OS involvement. In examples, the embodiments include receiving an out-of-band request from a human interface device, receiving an in-band request from the human interface device; and sending a signal directly to a peripheral device, via a micro-control unit, to honor the out-of-band request. In embodiments, the out-of-band request is received via an inter-integrated circuit. In embodiments, sending the signal via the micro-control unit bypasses a central processing unit. In embodiments, bypassing the central processing unit avoids using operating systems drivers. Some embodiments include, prior to sending the signal via the micro-control unit, determining whether an in-band communication path is functioning properly. In embodiments, the out-of-band request is associated with one of a mouse or keyboard. In embodiments, the peripheral device is one or more cameras or one or more microphones. In examples, the embodiments include reading a state of the peripheral device, comparing the out-of-band request to the read state of the peripheral device, and determining to honor the out-of-band request based on the comparison. In embodiments, the out-of-band request includes a request to turn off the camera or microphone, and the read state of the camera or microphone corresponds to the camera or microphone being on. In embodiments, the sending a signal to honor the out-of-band request includes causing a state of the peripheral device to be altered. In examples, embodiments further include causing an indication of the altered state of the peripheral device to be displayed via an output device. In embodiments, the output device is different than the human interface device and the peripheral device.

Aspects of the present disclosure, for example, are described above with reference to block diagrams and/or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

In summary, aspects of the present disclosure include a system-integrated solution for input/output device extended-control without operating system driver involvement is provided. In examples, systems and methods include receiving an out-of-band request from a human interface device, receiving an in-band request from the human interface device, and sending a signal directly to a peripheral device, via a micro-control unit, to honor the out-of-band request. In examples, the out-of-band request is received via an inter-integrated circuit.

Clause A: A method, the method comprising: receiving an out-of-band request from a human interface device; receiving an in-band request from the human interface device; and sending a signal directly to a peripheral device, via a micro-control unit, to honor the out-of-band request.

Clause B: The method of Clause A, wherein the out-of-band request is received via an inter-integrated circuit.

Clause C: The method of Clause A, wherein sending the signal via the micro-control unit bypasses a central processing unit.

Clause D: The method of Clause A, further comprising: prior to sending the signal via the micro-control unit, determining whether an in-band communication path is functioning properly.

Clause E: The method of Clause A, wherein the peripheral device is one or more cameras or one or more microphones.

Clause F: The method of Clause E, further comprising: reading a state of the peripheral device; comparing the out-of-band request to the read state of the peripheral device; and determining to honor the out-of-band request based on the comparison.

Clause G: The method of Clause F, wherein the out-of-band request comprises a request to turn off the camera or microphone, and wherein the read state of the camera or microphone corresponds to the camera or microphone being on.

Clause H: The method of Clause A, wherein the sending a signal to honor the out-of-band request comprises causing a state of the peripheral device to be altered.

Clause I: The method of Clause H, further comprising causing an indication of the altered state of the peripheral device to be displayed via an output device.

Clause J: The method of Clause I, wherein the output device is different than the human interface device and the peripheral device.

Clause K: A system, the system comprising: a human interface device; a peripheral device; and a micro-control unit, the micro-control unit being configured to: receive an out-of-band request from a human interface device; and send a signal directly to a peripheral device to honor the out-of-band request.

Clause L: The system of Clause K, wherein the out-of-band request is received via an inter-integrated circuit.

Clause M: The system of Clause K, further comprising a central processing unit, and wherein sending the signal via the micro-control unit bypasses the central processing unit.

Clause N: The system of Clause K, wherein bypassing the central processing unit avoids using operating system drivers.

Clause O: The system of Clause K, wherein the peripheral device is one or more cameras or one or more microphones.

Clause P: The system of Clause O, wherein the micro-control unit is further configured to: read a state of the peripheral device; compare the out-of-band request to the read state of the peripheral device; and determine to honor the out-of-band request based on the comparison.

Clause Q: The system of Clause P, wherein the out-of-band request comprises a request to turn off the camera or microphone, and wherein the read state of the camera or microphone corresponds to the camera or microphone being on.

Clause R: The system of Clause K, wherein the sending a signal to honor the out-of-band request comprises causing a state of the peripheral device to be altered.

Clause S: A non-transitory computer-readable medium comprising instruction that, when executed by a computing device, cause the computing device to perform a set of operation comprising: receiving an out-of-band request from a human interface device; receiving an in-band request from the human interface device; and sending a signal directly to a peripheral device, via a micro-control unit, to honor the out-of-band request.

Clause T: The computer-readable medium of Clause S, wherein the out-of-band request is received via an inter-integrated circuit, wherein sending the signal via the micro-control unit bypasses a central processing unit, and wherein prior to sending the signal via the micro-control unit, the set of operations further comprises determining whether an in-band communication path is functioning properly.

The description and illustration of one or more aspects provided in this application are not intended to limit or restrict the scope of the disclosure as claimed in any way. The aspects, examples, and details provided in this application are considered sufficient to convey possession and enable others to make and use claimed aspects of the disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

## Claims

1. A method (300), the method comprising:
receiving (302) an out-of-band request from a human interface device (104);
receiving an in-band request from the human interface device; and
sending (310) a signal directly to a peripheral device (114), via a micro-control unit (106), to honor the out-of-band request.

2. The method of claim 1, wherein the out-of-band request is received via an inter-integrated circuit.

3. The method of claim 1, wherein sending the signal via the micro-control unit bypasses a central processing unit.

4. The method of claim 1, further comprising: prior to sending the signal via the micro-control unit, determining whether an in-band communication path is functioning properly.

5. The method of claim 1, wherein the peripheral device is one or more cameras or one or more microphones.

6. The method of claim 5, further comprising:
reading a state of the peripheral device;
comparing the out-of-band request to the read state of the peripheral device; and
determining to honor the out-of-band request based on the comparison.

7. The method of claim 6, wherein the out-of-band request comprises a request to turn off the camera or microphone, and wherein the read state of the camera or microphone corresponds to the camera or microphone being on.

8. A system, the system comprising:
a human interface device (104);
a peripheral device (114); and
a micro-control unit (106), the micro-control unit being configured to:
receive an out-of-band request from the human interface device (104); and
send a signal directly to the peripheral device (114) to honor the out-of-band request.

9. The system of claim 8, wherein the out-of-band request is received via an inter-integrated circuit.

10. The system of claim 8, further comprising a central processing unit, and wherein sending the signal via the micro-control unit bypasses the central processing unit.

11. The system of claim 10, wherein bypassing the central processing unit avoids using operating system drivers.

12. The system of claim 8, wherein the peripheral device is one or more cameras or one or more microphones.

13. The system of claim 8, wherein the sending a signal to honor the out-of-band request comprises causing a state of the peripheral device to be altered.

14. A non-transitory computer-readable medium (504) comprising instruction that, when executed by a computing device (500), cause the computing device to perform a set of operation comprising:
receiving (302) an out-of-band request from a human interface device (104);
receiving an in-band request from the human interface device; and
sending a signal directly to a peripheral device (114), via a micro-control unit (106), to honor the out-of-band request.

15. The computer-readable medium of claim 14, wherein the out-of-band request is received via an inter-integrated circuit, wherein sending the signal via the micro-control unit bypasses a central processing unit, and wherein prior to sending the signal via the micro-control unit, the set of operations further comprises determining whether an in-band communication path is functioning properly.
